Europäisches Patentamt

European Patent Office

Office européen des brevets

(19)

(11) Publication number: **0 134 850**
**B1**

# (12) EUROPEAN PATENT SPECIFICATION

(45) Date of publication of patent specification: **12.08.87**

(51) Int. Cl.⁴: **B 01 J 29/06**

(21) Application number: **83304719.4**

(22) Date of filing: **15.08.83**

(54) **Treatment of zeolites.**

(43) Date of publication of application:
**27.03.85 Bulletin 85/13**

(45) Publication of the grant of the patent:
**12.08.87 Bulletin 87/33**

(84) Designated Contracting States:
**BE DE FR GB IT NL SE**

(56) References cited:
**GB-A-2 079 737**
**US-A-4 073 865**
**US-A-4 361 713**
**US-A-4 374 296**

(73) Proprietor: **MOBIL OIL CORPORATION**
**150 East 42nd Street**
**New York New York 10017 (US)**

(72) Inventor: **Miale, Joseph Nicolas**
**25, Merrit Drive**
**Lawrenceville New Jersey 08648 (US)**
Inventor: **Chang, Clarence Dayton**
**11 Murray Place**
**Princeton New Jersey 08540 (US)**

(74) Representative: **Grundy, Derek George Ritchie et al**
**CARPMAELS & RANSFORD 43, Bloomsbury Square**
**London WC1A 2RA (GB)**

Courier Press, Leamington Spa, England.

EP 0 134 850 B1

## Description

This invention relates to the treatment of zeolites to enhance their activity.

High-silica zeolites are well known in the art and it is generally accepted that the ion exchange capacity of a crystalline aluminosilicate is directly dependent upon its aluminum content. Thus, for example, the more aluminum there is in a crystalline structure, the more cations are required to balance the electronegativity thereof, and when such cations are of the acidic type such as hydrogen, they impart high catalytic activity to the crystalline material. On the other hand, high-silica zeolites having little or substantially no aluminum have many important properties and characteristics and a high degree of structural stability and have become candidates for use in various processes including catalytic processes. Materials of this type are known in the art and include high silica-containing aluminosilicates such as ZSM-5 (US—A—3,702,886), ZSM-11 (US—A—3,709,979), and zeolite ZSM-12 (US—A—3,832,449) to mention a few.

The silica-to-alumina ratio of a given zeolite is often variable; for example, zeolite X can be synthesized with silica-to-alumina ratio of from 2 to 3; zeolite Y from 3 to about 6. In some zeolites, the upper limit of silica-to-alumina ratio was unbounded. ZSM-5 is one such example wherein the silica-to-alumina ratio is at least 5. US—A—3,941,871 discloses a crystalline metal organosilicate essentially free of aluminum and exhibiting an X-ray diffraction pattern characteristic of ZSM-5 type aluminosilicates. US—A—4,061,724; 4,073,865; and 4,104,294 describe microporous crystalline silicas or organosilicates wherein the aluminum content present is at impurity levels.

Because of the extremely low aluminum content of these silica-containing zeolites, their ion exchange capacity is not as great as materials with a higher aluminum content. Therefore, when these materials are contacted with an acidic solution and thereafter are processed in a conventional manner, they are not as catalytically active as their higher aluminum-containing counterparts.

This invention permits the preparation of high silica-containing materials which have all the desirable properties inherently possessed by such high silica materials yet have an acid activity which heretofore has only been manifested by materials having a higher aluminum content.

This invention is concerned with the treatment of high-silica zeolites, namely those of silica-to-alumina ratio greater than 500, preferably greater than 1000, and including those highly siliceous materials where the silica-to-alumina ratio is infinity or as reasonably close to infinity as practically possible. This latter group of highly siliceous materials is exemplified by US—A—3,941,871, 4,061,724, 4,073,865, 4,104,294 wherein the materials are prepared from reaction solutions which involve no deliberate addition of aluminum. However, trace quantities of aluminum are usually present due to the impurity of the reaction solutions. It is to be understood that the invention includes those materials which have other metals besides silica and/or alumina associated therewith, such as boron, iron and chromium, etc. Thus, the only requirement with regard to the starting materials utilized in a novel process of this invention, is that they have a silica-to-alumina ratio greater than about 500, irrespective of what other materials or metals are present in the crystal structure. They usually have a constraint index in the range 1 to 12. The particularly preferred starting materials for the novel process of this invention are those crystalline materials which have an X-ray diffraction pattern characteristic of ZSM-5, ZSM-11, and ZSM-12 irrespective of their chemical composition other than the minimum silica-to-alumina ratio. The preferred starting material for the novel process of this invention is a high silica-containing ZSM-5.

The invention is simple in nature and easy to carry out, although the results obtained are dramatic. The invention is carried out simply by contacting a high-silica zeolite either as crystallized or after calcination with an ammoniacal alkali metal aluminate solution, preferably an ammoniacal sodium aluminate solution, at a pH of about 8 to 14, preferably a pH greater than 10. A particularly preferred technique involves contacting the zeolite with the ammoniacal alkali metal aluminate solution by vacuum impregnation.

The amount of solution utilized to treat the zeolite is not narrowly critical and the solution to zeolite ratio can vary from 0.3 to <10 grams of solution per gram of zeolite. The amount of solution will vary as a function of its concentration and the desired enhancement of activity.

The process is carried out by treating the zeolite with the above described solution at temperatures ranging from 20 to 50°C, preferably from 20 to 35°C, for periods of time ranging from 20 minutes to 30 days, preferably from 1/2 hour to 5 days.

Following the above treatment, the zeolite is processed into its catalytically active form by conventional techniques, such as base exchange with appropriate cations such as hydrogen, ammonium, rare earth, and mixtures thereof. The zeolite may then be calcined by heating to a temperature in the range of 200—600°C in an atmosphere such as air, nitrogen, etc. at atmospheric, subatmospheric, or superatmospheric pressures for between 1 and 48 hours. The zeolite can, if desired, be incorporated in a matrix by techniques well known in the art. Conventional matrices include inorganic oxides, such as silica, alumina, silica alumina, etc.

The following examples will illustrate the novel process of this invention.

Example 1

A 2-g. sample of ZSM-5 zeolite having a silica-to-alumina ratio of about 26,000 and a sodium content of about 0.23 weight percent was impregnated with 3 grams of 5 weight percent sodium aluminate solution and calcined in air at 538°C for 20 hours.

Example 2

The product of Example 1 was treated with a 1-N 8 weight percent solution of ammonium nitrate.

Example 3

A sample of the same ZSM-5 used above was vacuum impregnated with a solution of sodium aluminate which was diluted by an equal volume of concentrated (12N) $NH_4OH$. The pH was 12.4. After 30 minutes, the sample was dried and submitted to three cycles of 1N $NH_4NO_3$ treatment followed by hot water washing. The sample was dried and calcined at 538°C prior to testing.

The products of Examples 1—3 were evaluated for alpha activity. The Alpha test is described in Journal of Catalysis, Vol. 4, pp. 522—529, August 1965.

The results are shown in the following table:

TABLE 1

| Activity of high $SiO_2$ Example | ZSM-5 after treatment | Alpha |
|---|---|---|
| 1 | $NaAlO_2$ treat | 0.4 |
| 2 | $NaAlO_2/NH_4NO_3$ treat | 0.2 |
| 3 | $NaAlO_2/NH_4OH$ imp+ $NH_4NO_3$ treat | 12 |

From the above table, it can be seen that the novel process of this invention resulted in a dramatic increase of activity. The procedure of Examples 1 and 2 did not result in any significant improvement, whereas the process of this invention (Example 3) did enhance activity.

## Claims

1. A method for enhancing the activity of a zeolite having a silica-to-alumina ratio greater than 500 which comprises contacting said material with an ammoniacal solution of an alkali metal aluminate for a period of time ranging from 1/2 hour to 5 days at a temperature of from 20 to 50°C and at a pH of at least 10.

2. The process of claim 1 wherein the alkali metal aluminate is sodium aluminate.

3. The process of claim 1 or claim 2 wherein the zeolite has a silica-to-alumina ratio in excess of 1600.

4. The process of any preceding claim wherein the zeolite is one synthesized from a reaction mixture in which aluminum is present only as impurity.

5. The process of any preceding claim wherein the ammoniacal alkali metal aluminate is applied to the zeolite by vacuum impregnation.

6. The process of any preceding claim wherein the zeolite is one having a constraint index of 1 to 12.

7. The process of any preceding claim wherein the zeolite is ZSM-5.

## Patentansprüche

1. Verfahren zur Erhöhung der Wirksamkeit eines Zeoliths mit einem Siliziumdioxid/Aluminiumoxid-Verhältnis von größer als 500, bei dem dieses Material mit einer ammoniakalischen Lösung eines Alkalimetallaluminats während eines Zeitraumes im Bereich von einer halben Stunde bis 5 Tagen bei einer Temperatur von 20 bis 50°C und einem pH-Wert von mindestens 10 in Kontakt gebracht wird.

2. Verfahren nach Anspruch 1, worin das Alkalimetallaluminat Natriumaluminat ist.

3. Verfahren nach Anspruch 1 oder 2, worin der Zeolith ein Siliziumdioxid/Aluminiumoxid-Verhältnis von größer als 1600 aufweist.

4. Verfahren nach einem der vorstehenden Ansprüche, worin der Zeolith ein solcher ist, der aus einer Reaktionsmischung synthetisiert wurde, in der Aluminium nur als Verunreinigung vorhanden ist.

5. Verfahren nach einem der vorstehenden Ansprüche, worin das ammoniakalische Alkalimetall Aluminat durch Vakuumimprägnierung auf den Zeolith aufgetragen wird.

6. Verfahren nach einem der vorstehenden Ansprüche, worin der Zeolith einer mit einem Zwangsindex von 1 bis 12 ist.

7. Verfahren nach einem der vorstehenden Ansprüche, worin der Zeolith ZSM-5 ist.

## Revendications

1. Un procédé pour améliorer l'activité d'une zéolite présentant un rapport silice/alumine supérieur à 500 qui consiste à mettre ladite matière au contact d'une solution ammoniacale d'un aluminate de métal alcalin pendant une période de temps comprise entre une demi heure et cinq jours à une température comprise entre 20 et 50°C et à un pH d'au moins 10.

2. Le procédé selon la revendication 1, dans laquelle l'aluminate de métal alcalin est l'aluminate de sodium.

3. Le procédé selon la revendication 1 ou la revendication 2, dans lequel la zéolite présente un rapport silice/alumine supérieur à 1600.

4. Le procédé selon l'une quelconque des revendications précédentes dans laquelle la zéolite est obtenue par synthèse à partir d'un milieu réactionnel dans lequel l'aluminium n'est présent qu'à titre d'impureté.

5. Le procédé selon l'une quelconque des revendications précédentes dans lequel l'aluminate de métal alcalin sous forme ammoniacale est appliqué à la zéolite par imprégnation sous vide.

6. Le procédé selon l'une quelconque des revendications précédentes dans lequel la zéolite est une zéolite présentant un indice de contrainte compris entre 1 et 12.

7. Le procédé selon l'une quelconque des revendications précédentes dans lequel la zéolite est la ZSM-5.